# EUROPEAN PATENT APPLICATION

(11) **EP 0 847 114 A1**
(43) Date of publication of application: **10.06.1998**
(21) Application number: 97309608.4
(22) Date of filing: 28.11.1997
(51) Int. Cl.: H01S 3/042, H01S 3/0941

(54) **Solid-state laser apparatus**

(30) Priority: 03.12.1996 JP 337505/96; 03.12.1996 JP 337506/96
(71) Applicant: MIYACHI TECHNOS CORPORATION, Noda-shi, Chiba-ken (JP)
(72) Inventor: Nakayama, Shin-ichi, 95-3, Futatsuzuka, Noda-shi, Chiba-ken (JP); Ukaji, Takahiro, 95-3, Futatsuzuka, Noda-shi, Chiba-ken (JP)
(74) Representative: Spall, Christopher John

(57) **Abstract**

The present solid-state laser apparatus stably and effectively cools a slab-type solid-state laser medium, realizing a simple and small-sized cooling system and entirety of the apparatus while maintaining the desired mode and oscillation efficiency. In the cooling system (12), a vertically-movable horizontal pressure plate (44) is set onto the top of a heat-conductive holder plate (18). A plurality of equally-spaced rubber-like elastic members (42) interpose between the pressure plate (44) and the holder plate (18). Through bolt-through-holes in the horizontal pressure plate, bolts are screwed and tightened up into tapped holes formed in the top of the support posts (48). Thus a pressure determined by elasticity and physical dimension of the rubber-like elastic members (42) is applied vertically to the holder plate (18). A corresponding and uniform pressure is applied to a cooling face of the solid-state laser medium (10) carried on a heat-conductive tray (16). The bottom of the heat-conductive holder plate (18) and the top of the heat-conductive tray (16) are tightly coupled to the solid-state laser medium cooling faces with a uniform pressure on the medium crystal without exerting non-uniform distortion of the crystal, thus providing good thermal coupling.

## Description

### Background of the Invention

The present invention relates to solid-state laser apparatus using a slab- type solid-state laser medium.

The slab-type solid-state laser medium is a solid-state laser device having a quadrangle cross section. Within the laser device, a laser beam typically travels along a zigzag path while repeating reflections on a pair of internal total reflection surfaces parallel to the laser beam. This eliminates thermal effect of lens and the double refraction effect produced within the medium. Thus, the slab-type solid-state laser medium can operate in the desired mode with high power.

The prior art solid-state laser apparatus using such a solid-state laser medium for laser oscillation typically supplies a coolant, such as cooling water (e.g. pure water) or cooling gas (e.g. nitrogen gas) to the solid-state laser medium for cooling. Such a direct coolant supply system in which the coolant is directly supplied to the surface of the solid-state laser medium can effectively cool the solid laser medium. This system, however, requires a sealing means for sealing the coolant around the laser medium, so that it becomes complicated and large-sized.

A semiconductor laser having much better efficiency and smaller size than those of a conventional excitation lamp has recently been employed as a excitation light source for supplying an excitation light to the solid-state laser medium. To further downsize the overall apparatus, it is desired to simplify and miniaturize the laser medium cooling system.

To this end, an arrangement may be proposed in which a thermal conductor having a high heat conductivity, such as copper and aluminum, is thermally coupled to the solid laser medium. The thermal conductor has an internal passage through which a coolant passes. With this arrangement, the solid-state laser medium is cooled by way of the thermal conductor. The thermal conductor cooling system is free from sealing, so that it can be made in a smaller size with a simplified structure.

In the prior art heat conductor cooling system for the solid-state laser apparatus, the thermal conductor is secured to the solid-state laser medium by adhesive, or the solid-state laser medium is sandwiched between thermal conductors. The adhesive arrangement, however, is complicated in assembling and expensive. The sandwiching arrangement has found hard to uniformly press the thermal conductors against the solid-state laser medium crystal. Due to the non-uniform distortion of the medium crystal, the solid-state laser medium cannot keep the desired mode of operation,resulting in reduced operation efficiency.

The prior art solid-state laser apparatus of this type employs a cylindrical lens to collimate the laser beam radially emitted from the excitation semiconductor laser for injection into a laser medium side face. In the alternative, it employs a light guide plate (glass plate) to guide the laser beam to the laser medium side face. Such an optical condensing system using a cylindrical lens or optical guiding system using a light guide plate requires complicated assembling, so that the apparatus becomes more expensive. Further it undergoes loss of energy of the excitation laser beam when it is passing through, thus reducing the laser operation efficiency.

### Summary of the Invention

It is, therefore, an object of the invention to provide a solid-state laser apparatus which can stably and effectively cool a slab-type solid-state laser medium by way of heat conduction.

Another object of the invention provide a solid-state laser apparatus with a cooling system which can be realized in a more simple structure and smaller size and which can maintain the desired mode and high operation efficiency.

A still another object of the invention is provide a solid-state laser apparatus which does not need an optical condensing system or auxiliary optics to excite a solid-state laser medium side face by a semiconductor laser and which can provide improved laser beam excitation operability and solid-state laser oscillation efficiency.

In accordance with an aspect of the invention, there is provided a solid-state laser apparatus for oscillating a laser beam using a solid-state laser medium of slab type, comprising:
a first thermal conductor disposed in contact with one of a pair of cooling faces of said solid-state laser medium so as to support said solid-state laser medium, said cooling faces being opposite faces of said solid-state laser medium;
a second thermal conductor disposed in contact with the other of said cooling faces of said solid-state laser medium;
a pressurizing member for pressing said second thermal conductor against said solid-state laser medium;
at least one rubber-like elastic member interposed between said pressurizing member and said second thermal conductor so as to elastically apply the pressure from said pressurizing member to said second thermal conductor by elastic deformation; and
an excitation light injecting means for injecting excitation light into a side face of said solid-state laser medium other than said cooling faces.

With this arrangement, the first and second thermal conductors support or hold the slab-type solid-state laser medium by keeping contact with the opposing cooling faces of the solid-state laser medium. The pressure from the pressurizing member is elastically applied to the second thermal conductor by way of the rubber-like elastic member so that the pressure is eventually applied to the solid-state laser medium. Thus, the arrangement can stably and effectively cool the solid-state laser medium by way of heat conduction. The cooling system and the entirety of the apparatus can be simplified and miniaturized while maintaining the desired mode and high oscillation efficiency.

In accordance with another aspect of the invention, there is provided a solid-state laser apparatus for oscillating a laser beam using a solid-state laser medium of slab type, comprising:
a heat-conductive holder disposed in contact with a cooling face of said solid-state laser medium so as to hold said solid-state laser medium
an excitation laser beam generating means disposed sideward of said solid-state laser medium at a predetermined position with an laser beam output directed to an excitation face of said solid-state laser medium; and
an excitation laser beam confiner extending sideward of said solid-state laser medium from said holder so as to surround said excitation face of said solid-state laser medium, said confiner having an opening for directing the excitation laser beam emitted from said laser beam outlet to said excitation face of said solid-state laser medium and an inner wall disposed so as to confine the excitation laser beam emitted from said laser beam outlet.

With this arrangement, the excitation laser beam from the semiconductor laser is injected into a solid-state laser medium side face without the need of an optical condensing system or optical guiding system. Further, the excitation laser beam is confined within a minimum space of a beam confining compartment so that the excitation laser beam can be used in full to excite the solid-state laser medium. Therefore, it has a small size with a simple structure and yet can provide high oscillation efficiency with high energy laser beam.

### Brief Description of the Drawings

The above and other objects, features and advantages of the invention can become more apparent from the following description taken in conjunction with the accompanying drawings in which:
Fig.1 is an front view of an overall arrangement of a first embodiment of a solid-state laser apparatus in accordance with the invention;
Fig.2 is an elevational section view of the solid-state laser apparatus of the embodiment;
Fig.3 is a plan view of the solid-state laser apparatus of the embodiment;
Fig.4 is an enlarged partial plan view of the solid-state laser apparatus of the embodiment;
Fig.5 is a partially sectional side view of the solid-state laser apparatus of the embodiment;
Fig.6 is a side cross sectional view of the solid-state laser apparatus of the embodiment;
Fig.7 is a front view of a second embodiment of a solid-state laser apparatus in accordance with the invention;
Fig.8 is an enlarged, partial and sectional view of the solid-state laser apparatus of the second embodiment;
Fig.9 is a plan view of the solid-state laser apparatus of the second embodiment;
Fig.10 is a plan view of the solid-state laser apparatus of the second embodiment; and
Fig.11 is a side section view of the solid-state laser apparatus of the second embodiment.

### Detailed Description of Preferred Embodiments

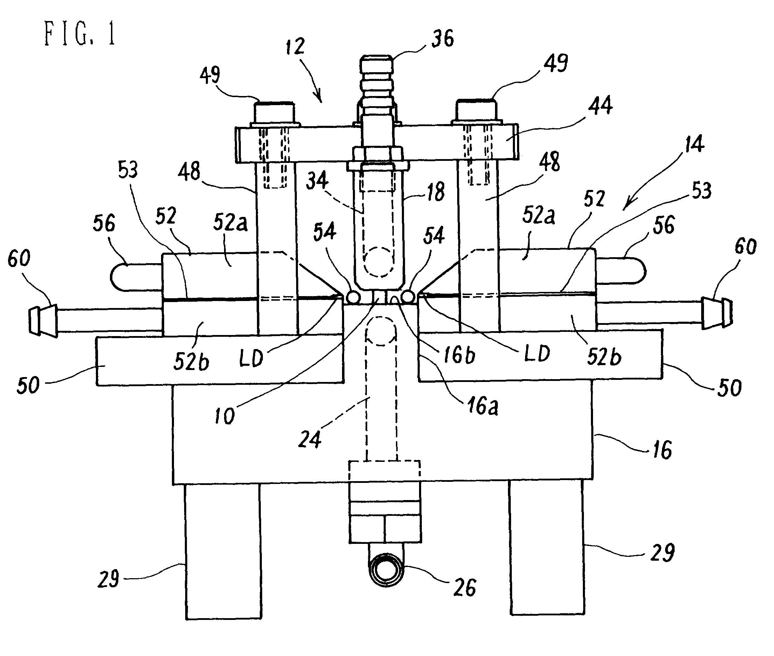

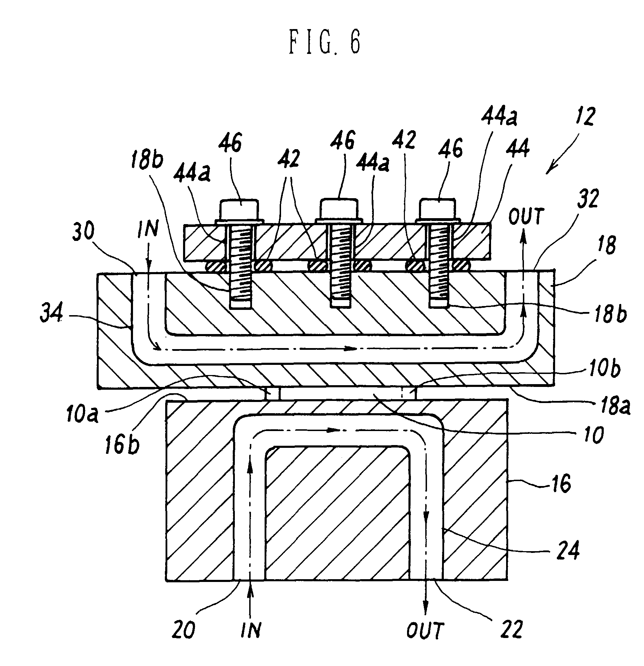

A solid-state laser apparatus of the first embodiment of the invention is now described by reference to Figs.1 to 6.

The solid-state laser apparatus comprises a slab-shaped solid-state laser medium 10, a cooling system 12 of heat-conduction type which supports or holds the solid-state laser medium 10 and cools it, and an excitation light supply or excitation system 14 which supplies an exciting light to the solid-state laser medium.

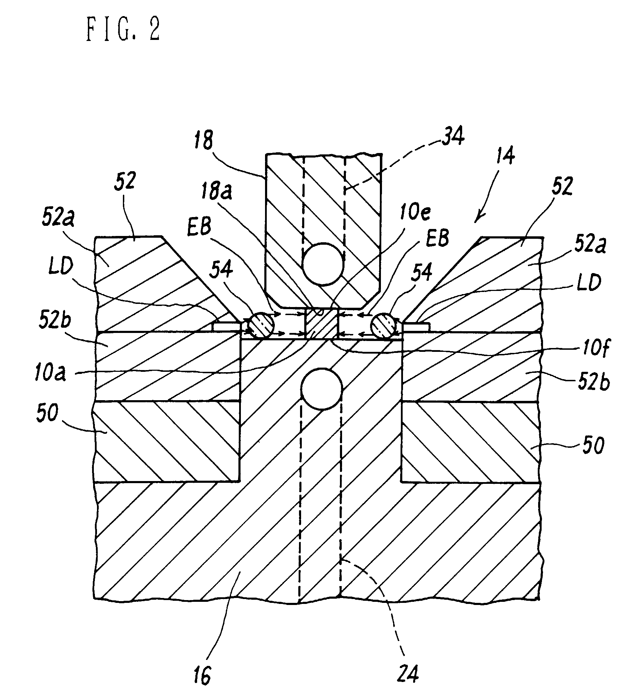

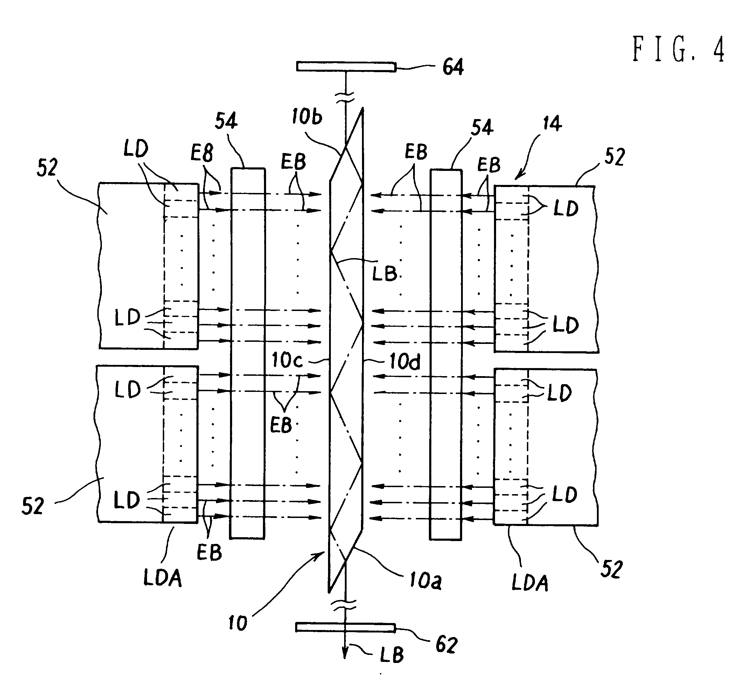

The solid-state laser medium 10 may be formed from the material, such as Nd: GGG and Nd: YAG. As shown in Figs.1 and 2, the solid-state laser medium 10 has a shape of a parallel hexahedron with a rectangle cross section. The size is, for example, 2mm × 2mm × 40mm. As best shown in Fig.4, end faces 10a and 10b of the solid-state laser medium 10 are inclined a predetermined angle with respect to the optical axis (longitudinal direction). The solid-state laser medium 10 has four side faces. Out of them, a first pair of parallel side faces 10c and 10d having an oblique angle from the end faces 10a and 10b define each an internal surface of total reflection (total reflection face) which totally reflects a laser beam LB within the medium whereas the external surface defines an excitation surface which receives an excitation light. A second pair of parallel side faces 10e and 10f normal to the total reflection or excitation faces 10c and 10d define each a cooling face to be cooled by heat conduction.

The cooling system 12 comprises a bed or tray 16 which carries the solid-state laser medium 10, in direct contact with the bottom cooling face 10f thereof and is formed from material having high heat conductivity, such as copper or aluminum, and a holder plate 18 which is in direct contact with the top cooling face 10e of the solid-state laser medium 10 and formed from material having high heat conductivity, such as copper and aluminum.

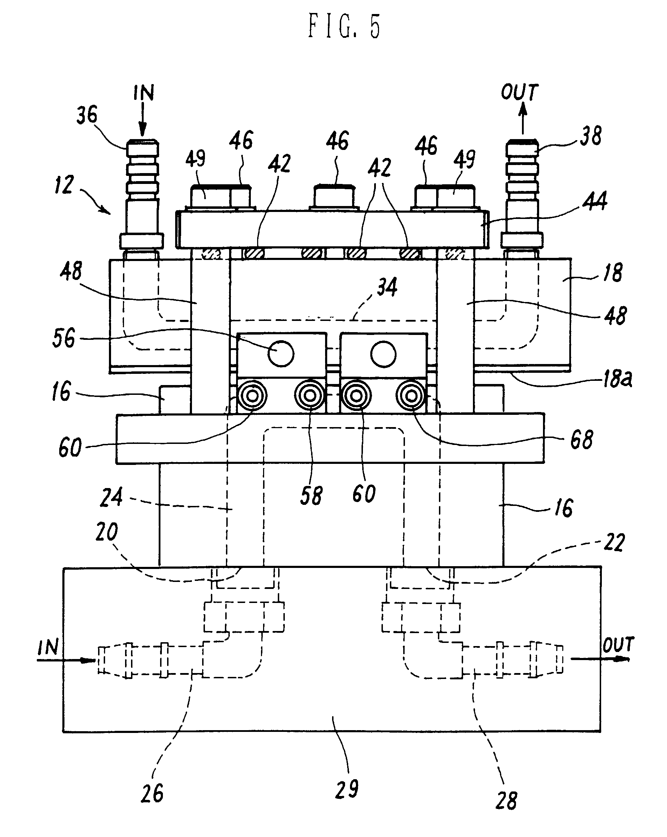

As shown in Figs.1 and 2, the tray 16 is a heat-conductive block with a T-like convex section. The solid-state laser medium 10 is placed on a flat top surface (cooling surface) 16b of the protruded portion 16a of the tray 16 at center and along the longitudinal direction of the protruded portion 16a. The tray 16 includes an internal coolant passage 24 which longitudinally extends within the protruded portion 16a and communicate with a coolant inlet 20 and outlet 22 disposed the tray bottom. As shown in Fig.5, connectors 26 and 28 are attached to the coolant inlet 20 and outlet 22 for connection to an external pipe (not shown). A pair of legs or supports 29 are coupled to the bottom of the tray 16.

A coolant (for instance cooling water) supplied from a coolant source (not shown) through pipes and connectors 26 and 28 flows into the coolant passage 24. This cools the tray 16 (particularly the protruded portion 16a), and also cools the solid-state laser medium 10 (in particular bottom cooling face 10f) through the tray 16 by means of heat conduction from the coolant.

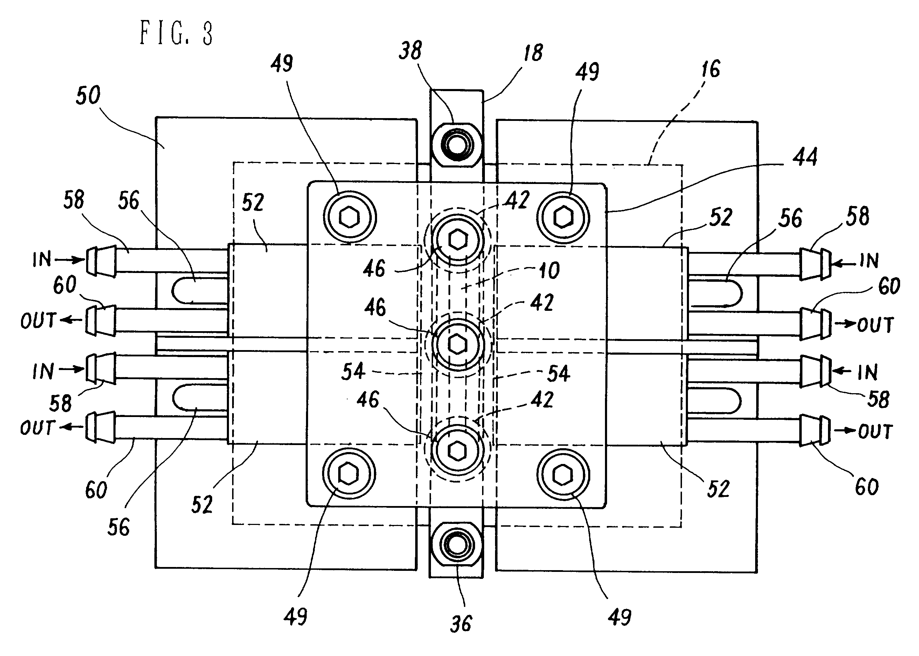

As shown in Figs.1, 2, 3, 5 and 6, holder plate 18 is a heat-conductive block having a rectangle cross section. The holder plate 18 has a flat bottom (cooling surface) 18a covering the cooling face 10e of the solid-state laser medium 10, and an internal coolant passage 34 which extends longitudinally in the internal of the bottom 18a and communicates with coolant inlet 30 and outlet 32 disposed on the top of the holder plate at or near ends. As shown in Figs.3 and 5, connectors 36 and 38 are attached to the coolant inlet 30 and 32 for connection to an external pipe (not shown).

A coolant (for instance cooling water) supplied from a coolant source (not shown) through pipes and connectors 36 and 38 flows into the coolant passage 34. This cools the holder plate 18 (in particular the bottom 18a nearby), and eventually cools the solid-state laser medium 10 (in particular the top cooling face 10e) through the holder plate 18 by way of heat conduction from the coolant.

As shown in Fig.3, 5 and 6, a plurality of (for instance three) tapped holes 18b are formed with equal spacing in the top of the holder plate 18 between the coolant inlet 30 and outlet 32. A horizontal pressure plate 44 is set onto the top of the holder plate 18. A plurality of (for instance three) rubber-like elastic members 42 are interposed between the pressure plate 44 and the holder plate 18. From the top of the horizontal pressure plate 44, bolts 46 are screwed into tapped holes 18b of the holder plate 18, passing through through-holes 44a and holes of the rubber-like elastic members 42. For the rubber-like elastic member 42, an O-ring of silicone rubber with inside diameter of 7mm and thickness of 2mm may be employed, for example.

The horizontal pressure plate 44 is a rectangle plate and rests on a plurality of (for instance four) support posts 48 each of which has a vertical threaded hole on the top thereof and is vertically set on the tray 16. In the horizontal pressure plate 44, bolt through-holes are vertically formed in correspondence with each threaded hole of the support posts 48. A bolt 49 passes through a bolt through-hole of the horizontal pressure plate 44 and resiliently screwed into each threaded hole of the support post 48. Thus, a pressure determined by elasticity and physical dimension of the rubber-like elastic members 42 is applied vertically to the holder plate 18. A corresponding and uniform pressure is vertically applied to cooling faces 10e and 10f of the solid-state laser medium 10 on the tray 16.

Therefore, the bottom 18a of the holder plate 18 and the top 16b of the tray 16 are tightly coupled to the solid-state laser medium cooling faces 10e and 10f with a uniform pressure on the medium crystal without exerting non-uniform distortion of the crystal, thus providing good thermal coupling.

Since the present cooling system 12 cools the solid-state laser medium 10 by means of heat conduction of the tray 16 and 18, no sealing means for sealing the coolant around the solid-state laser medium 10 is needed, thus realizing a rugged, simple and small-sized structure and miniaturizing the entirety of the apparatus. In addition, the solid-state laser medium 10 may easily be replaced by loosing up bolts 49 and lifting up the horizontal pressure plate 44. Thus, it is easy to handle.

The excitation light supply 14 of the solid-state laser apparatus is shown in Figs.1, 2 and 3. It comprises a plurality of (for instance four) excitation laser oscillator units 52 which are disposed on an insulator plate 50 right and left of protruded portion 16a of the tray 16, and a parallel pair of cylindrical lenses 54 disposed on the top 16b of the protruded portion of the tray 16 at opposite sides of the solid-state laser medium 10.

Each excitation laser oscillator unit 52 comprises upper or lower holders 52a and 52b which are joined together with an insulation layer 53 interposed therebetween. Each holder 52a, 52b is formed from metal having high heat conductivity and high electric conductivity, such as copper. A groove is formed at one end (front) of the holder assembly. In the gap, semiconductor lasers for excitation, such as laser diodes LD are arranged in an array. The laser diode array LDA faces the excitation faces 10c and 10d of the solid-state laser medium 10.

As shown in Figs.2 and 4, the laser diode array LDA of the excitation laser oscillator unit 52 radially emits an excitation laser beam EB that is horizontally collimated but vertically radial. The excitation laser beam EB passes through the cylindrical lens 54 which collimates the beam EB with respect to the vertical direction. The resultant collimated beam is uniformly and normally injected into the excitation faces 10c and 10d of the solid-state laser medium 10.

The upper and lower holders 52a and 52b of each excitation laser oscillator unit 52 not only serve as an electric conductor for supplying a driving current to oscillate the laser diode array LDA but also function as a heat sink for removing the heat generated in the laser diode array LDA. As a base of the laser diode array LDA, an electric conductor (not shown) having low thermal expansion is embedded near the front of the lower holder 52b. A rod electrode (cathode) 56 is disposed on the back of the upper holder 52a. On the back of the lower holder 52b, cooling water inlet (connector) 58 and outlet (connector) 60 are disposed to supply coolant (for instance cooling water) from a coolant source (not shown) to the internal coolant passage within the lower holder 52b.

An electric wiring system for supplying a driving current to activate the laser diode array LDA is not shown since it is no essential part of the solid-state laser apparatus of the invention.

As compared with the conventional excitation lamp light, the excitation laser beam EB emitted by the laser diode array LDA and injected into the excitation faces 10c and 10d of the solid-state laser medium 10 has much higher energy density with lower power consumption, thus remarkably improving the oscillation efficiency of the main laser beam LB generated by the solid-state laser medium 10. In addition, the cooling faces 10e and 10f of the solid-state laser medium 10 which are normal to the excitation faces 10c and 10d are tightly pressed by the flat cooling surfaces 16a and 18a of the tray 16 and the holder 18 in the cooling system 12, so that the solid-state laser medium 10 can effectively and stably be cooled.

The present apparatus is simple and small-sized and yet can efficiently oscillate in the desired mode with a high energy laser beam LB output.

As shown in Fig.4, the laser beam LB travels along a zigzag path within the solid-state laser medium 1.0 while repeating reflections on total internal reflection surfaces which are back (inside) of the parallel surfaces 10c and 10d. The laser beam LB resonates and is amplified by repeating reflections between output mirror 62 and total reflection mirror 64 which are opposed to the ends 10a and 10b, respectively. The output mirror 62 outputs the laser beam. The output mirror 62 and the total reflection mirror 64 which form an optical resonator are not shown in other figures (Figs.1 to 3, 5 and 6) since they are disposed external of the assembly.

In the illustrated embodiment, the excitation light supply 14 employs a cylindrical lens 54 to collimate the excitation laser beam EB from an excitation laser oscillator 52 for projection onto an excitation surface 10c or 10d of the solid-state laser medium 10. The cylindrical lens may be omitted, however, when the exciting laser beam EB from the excitation laser oscillator unit 52 is directly projected onto the excitation surface 10c or 10d of the solid-state laser medium. As an excitation source, an excitation lamp may be employed though the apparatus may be somewhat large-sized.

Whereas in the embodiment, the holder plate 18 and tray 16 are disposed in direct contact with the cooling surfaces 10e and 10f of the solid-state laser medium, they may be disposed in indirect contact with the cooling surfaces by interposing any suitable member having high heat conductivity.

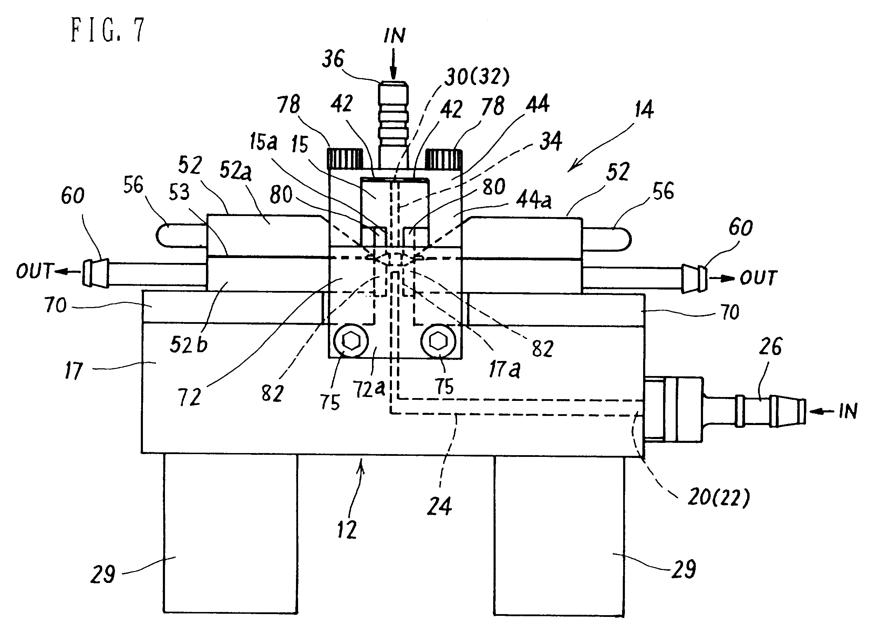

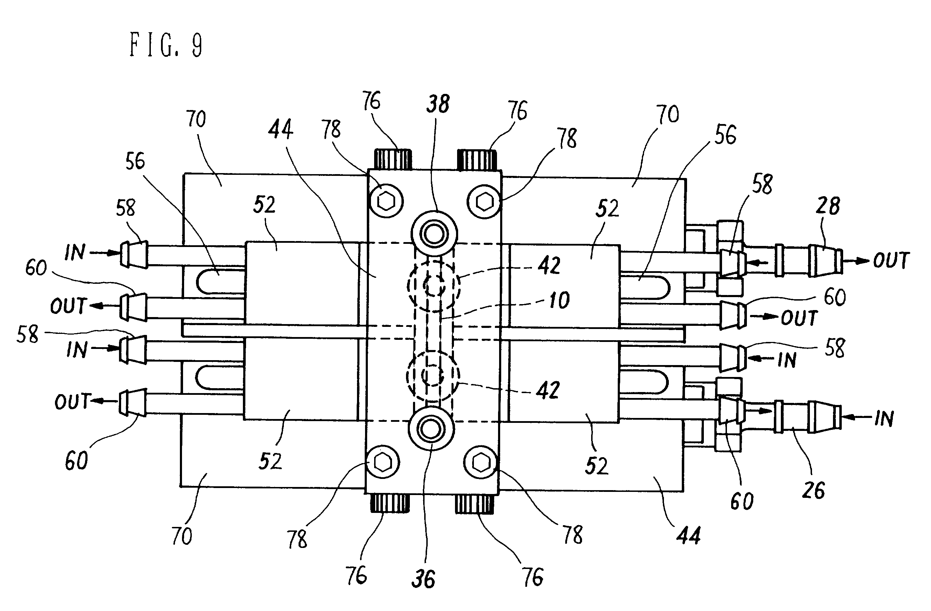

Now, a solid-state laser apparatus of the second embodiment of the invention is described by reference to Figs.7 to 11. Throughout the figures, like components of the first and second embodiments are designated by corresponding numerals.

The cooling system 12 of the solid-state laser apparatus comprises upper and lower holders 15 and 17 which are formed from material having high heat conductivity, such as copper and aluminum. They are disposed in direct contact with the top and bottom cooling faces 10e and 10f of the solid-state laser medium 10 and vertically support the solid-state laser medium 10. The upper and lower holders 15 and 17 correspond to the holder plate 18 and the tray 16, respectively, of the first embodiment.

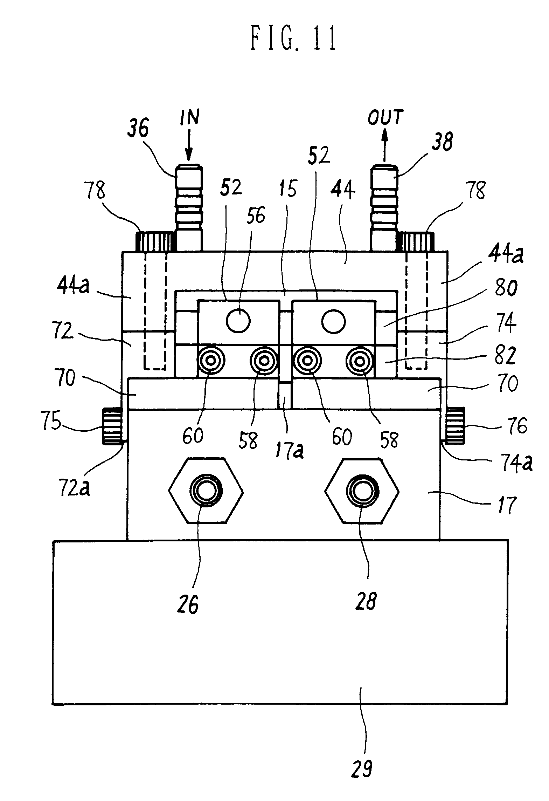

As shown in Figs.7 and 11, a pressure plate 44 having four corner legs 44a is set onto the top of the upper holder 15. A plurality of (for instance two) rubber-like elastic members 42 are interposed between the top of the upper holder 15 and the pressure plate 44.

The bottom of the each leg 44a of the pressure plate 44 is disposed on a corresponding one of a pair of support members 72 and 74 which is seated on opposite edges of the lower holder 17 (front and back edges in Fig.7 and right and left edges in Fig.11) through insulation plates 70, respectively. Outer ridges 72a and 74a of the support members 72 and 74 extend downward in engagement with a side of the lower holder 17. At the bottom ends of the ridges 72a and 74a, bolts 75 and 76 are screwed into the lower holder 17, thus securing the support members 72 and 74 to the lower holder 17.

In each leg 44a of the pressure plate 44, a bolt through-hole is vertically formed. A tapped-hole is formed in the support members 72 and 74 in correspondence with each bolt through-hole. A bolt 78 passes through a bolt through-hole of each leg 44a of the pressure plate 44 and screwed into each tapped-hole of the support members 72 and 74. Thus, the pressure determined by elasticity and physical dimension of the rubber-like elastic members 42 is applied vertically to the upper holder plate 15. A corresponding and uniform pressure is vertically applied to the cooling faces 10e and 10f of the solid-state laser medium 10 on the lower holder 17.

As a result, the bottom 15a of the upper holder plate 15 and the top 17b of the lower holder plate 17 are tightly coupled to the solid-state laser medium cooling faces 10e and 10f with a uniform pressure on the medium crystal without exerting non-uniform distortion of the crystal, thus providing good thermal coupling. The solid-state laser medium 10 may readily be replaced by loosing up the bolts 78 and lifting up the pressure plate 44 and the upper holder 15.

A surface of the protrusion 15a and 17a of the upper and lower holders 15 and 17, corresponding to the cooling faces 10e and 10f of the solid-state laser medium 10 is covered with a coating (of, for example,gold, silver) having high light reflectance by means of plating, vapor deposition or sputtering.

The excitation system 14 of the solid-state laser apparatus is shown in Figs.7, 8 and 9. It comprises a plurality of (for instance four) excitation laser oscillator units 52 which are disposed on the lower holder 17 through insulation plates 70 at the opposite sides of the protrusion 17a, and upper and lower excitation laser beam confiners 80 and 82 which are integrally coupled to opposite side faces of the protrusions 15a and 17a of the upper and lower holders 15 and 17.

Each laser oscillator unit 52 has a laser diode array LDA, output of which is directed to an excitation surface 10c, 10d of the solid-state laser medium 10 and disposed near the solid-state laser medium with a space of, say, about 1.5 to 3.0mm from the excitation surface 10c, 10d of the solid-state laser medium 10.

The upper and lower excitation laser beam confiners 80 and 82 are each formed by a metal plate easy to be machined, such as copper and aluminum. Each confiner is secured to a side face of the protrusion 15a, 17a of the upper and lower holders 15 and 17 by means of bolts (not shown). Each confiner extend sideward so as to surrounds the excitation face 10c, 10d of the solid-state laser medium 10. An opening or slit 86 of, say, about 0.5mm is formed between the upper and lower laser beam confiners 80, 82 to direct the laser beam output of an excitation laser oscillator unit 52 to the excitation surface 10c or 10d of the solid-state laser medium 10. Each confiner includes an inner wall 80a or 82a to confine the excitation laser beam EB from the laser beam output.

In a plane perpendicular to the longitudinal direction of the solid-state laser medium, the inner (upper and lower) walls of the upper and lower holders 15 and 17, inner walls 80a and 82a of the upper and lower exciting laser beam confiners 80 and 82 and the laser beam outlet of the excitation laser oscillator unit 52 define an excitation laser beam confining compartment 84 for optically confining the excitation laser beam EB within it. The inner walls 80a and 82a of the upper and lower exciting laser beam confiners 80 and 82 are covered with a coating or clad of high light reflectivity, such as gold or silver by means of plating,vapor deposition or sputtering.

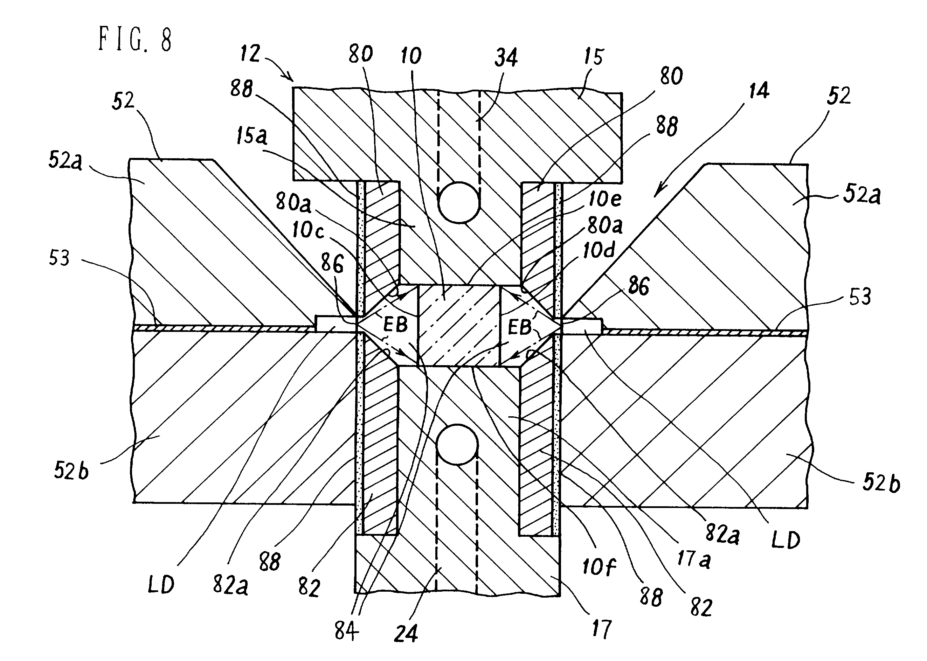

As shown in Fig.8, in each excitation laser oscillator unit 52, the laser beam outlet of the laser diode array LDA coincides with the opening 86 of the excitation laser beam confiner 80, 82, so that the front of the upper and lower holders 52a and 52b makes contact with an outer wall of the upper and lower exciting laser beam confiners 80 and 82. The outer wall of the exciting laser beam confiner 80, 82 is coated or covered with an insulation sheet 88 of, say, about 0.2mm thickness to prevent short circuiting of upper and lower holders 15 and 17 of the excitation laser oscillator unit 52.

The inner wall 80a, 82a of the excitation laser beam confiner 80, 82 is tapered so as to allow blocking-free radiation of the excitation laser beam EB that has been emitted from the laser diode array LDA of the excitation laser oscillator unit 52 in the direction normal to the longitudinally direction of the solid-state laser medium 10 with a predetermined angle of divergence, say, 60 degrees.

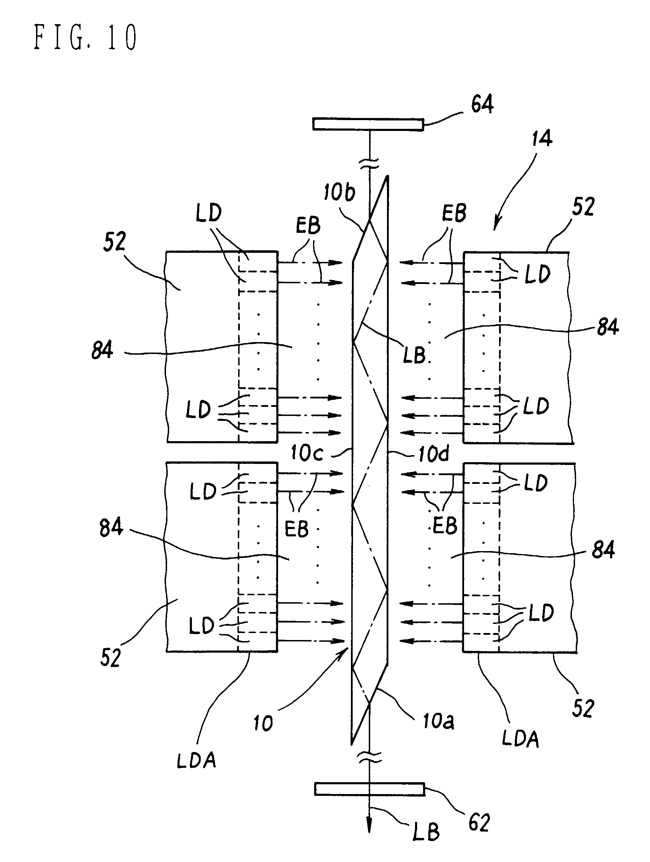

As shown in Figs.8 and 10, the laser diode array LDA of the excitation laser oscillator unit 52 emits a horizontally collimated but vertically radial excitation laser beam EB which is directly projected onto the excitation surface 10c or 10d of the solid-state laser medium 10 for excitation of the solid-state laser medium 10.

Part of the excitation laser beam EB that has been injected on one of the excitations faces, for instance, the one 10c traverses the medium 10 and passes through the opposite excitation face 10d. The excitation laser beam EB out of the excitation surface 10d of the solid-state laser medium 10 may reflect on the inner wall 80a, 82a of the excitation laser beam confiner 80, 82 or inner wall (upper and lower) of the upper and lower holders 15 and 17 and travels back to the excitation surface 10d of the solid-state laser medium 10.

The excitation laser beam EB that have got out of the excitation face 10c of the solid-state laser medium 10 similarly behaves, reflecting on a light reflective inner wall of the confining compartment 84 (inner wall 80a, 82a of the excitation laser beam confiners 80 and 82 and inner wall of upper end lower holders 15 and 17) and back to the excitation face 10c of the solid-state laser medium 10.

In this manner, the present solid-state laser apparatus does not need a light condensing system such as a cylindrical lens or a light guide plate, or an auxiliary optics that introduces an energy loss of the excitation laser beam. Instead, the excitation laser beam EB emitted by the laser diode array LDA of the excitation laser oscillator unit 52 is directly injected into an excitation faces 10c or 10d of the solid-state laser medium without introducing energy loss. In addition, the excitation laser beam EB that have passed through the solid-state laser medium 10 will reflect on the inner wall of the light confining compartment 84 primarily formed by the excitation laser beam confiners 80 and 82, travelling back to the solid-state laser medium 10. Therefore, the optical energy of the excitation laser beam EB generated by the excitation laser oscillator unit 52 is used in full for excitation of solid-state laser medium 10, thus remarkably improving laser oscillation efficiency.

The light confining compartment 84 takes only a minimized space to accommodate the solid-state laser medium 10, thus realizing a very small-sized excitation system 14. Since no optical condensing system or auxiliary optics is required, it is easy to assemble and less expensive to make.

In the illustrated embodiment, the upper and lower excitation laser beam confiners 80 and 82 are formed by individual plates which are secured to opposite side faces of the upper and lower holders 15 and 17. However, the upper and lower excitation laser beam confiners 80 and 82, and upper and lower holders 15 and 17 may be formed by an integral metal block having high heat conductivity. The excitation laser beam confiners 80 and 82 may be formed from alumina ceramic having high optical reflectivity and electrically insulation (for instance, "MACERITE S" made by Mitsui Mining Co., Ltd). In this case, the outer wall insulation sheet 88 may be omitted.

The structure, shape or material of the excitation laser beam confiners 80 and 82 in the embodiment is illustrative only and can be modified in several ways. The shape or dimension of the opening 86 may be modified or chosen depending on the structure of the semiconductor laser (in particular the structure around the laser beam outlet). The laser beam outlet of the semiconductor laser may be placed internal of the light confining compartment 84 beyond the opening 86.

In the illustrated embodiment, an O-ring is used for rubber-like elastic member 42. It may be replaced by a rubber-like elastic body having a different shape, for instance a ball. The O-ring is convenient to assembly. To transmit a vertical pressure properly (vertically) from the horizontal presser plate 44 to the holder plate 18, a ball-shaped rubber-like elastic member may be preferred. The rubber-like elastic member of the invention may be either natural or synthetic one, and any rubber-like material may be employed for the elastic member.

In the illustrated cooling system, internal coolant passages 34 and 24 through which coolant passes are formed within thermal conductors, such as holder plate 18 (upper holder 15) and tray 16 (lower holder 17). The coolant passage may be constructed by pipes provided external of the thermal conductors. In place of using coolant, a cooling thermal module having cooling elements, for instance, Pertier effect elements may be coupled to thermal conductors.

In the illustrated embodiment, the laser beam LB travels along a zigzag path within a slab-type solid-state laser medium 10 while repeating reflections on an internal total reflection surface defined by an inner surface of a pair of parallel excitation faces whereas, outside of the medium, laser beam LB travels straight in parallel with the longitudinal direction of the medium. The illustrated laser optical path is illustrative only and can be arbitrarily chosen, inside or outside of the solid-state laser medium 10.

## Claims

1. A solid-state laser apparatus for emitting a laser beam using a solid-state laser medium of slab type, comprising:
a first thermal conductor disposed in contact with one of a pair of cooling faces of said solid-state laser medium so as to support said solid-state laser medium, said cooling faces being opposite faces of said solid-state laser medium;
a second thermal conductor disposed in contact with the other of said cooling faces of said solid-state laser medium;
a pressurizing member for pressing said second thermal conductor against said solid-state laser medium;
at least one rubber-like elastic member interposed between said pressurizing member and said second thermal conductor so as to elastically apply the pressure from said pressurizing member to said second thermal conductor by elastic deformation; and
an excitation light injecting means for injecting excitation light onto a side face of said solid-state laser medium other than said cooling faces.

2. The solid-state laser apparatus of claim 1 wherein said rubber-like elastic member has a shape of an O-ring.

3. The solid-state laser apparatus of claim 1 wherein said rubber-like elastic member has a shape of a ball.

4. The solid-state laser apparatus of claim 1 wherein said excitation light injecting means comprises:
a semiconductor laser for emitting an excitation laser beam; and
a cylindrical lens for collimating the laser beam from said semiconductor laser to thereby inject said collimated laser beam into said side face of said solid-state laser medium.

5. The solid-state laser apparatus of claim 1 wherein said pressurizing member comprises:
a pressure plate placed on said second thermal conductor, said rubber-like elastic member being interposed therebetween;
a support member for supporting said pressure plate in a direction perpendicular to a support surface of said first thermal conductor; and
a screw member screwed into said support member through said pressure plate.

6. The solid-state laser apparatus of claim 1 wherein said first thermal conductor includes a passage through which coolant passes.

7. The solid-state laser apparatus of claim 1 wherein said second thermal conductor includes a passage through which coolant passes.

8. A solid-state laser apparatus for emitting a laser beam using a solid-state laser medium of slab type, comprising:
a heat-conductive holder disposed in contact with a cooling face of said solid-state laser medium so as to hold said solid-state laser medium
an excitation laser beam generating means disposed sideward of said solid-state laser medium at a predetermined position with an laser beam outlet directed to an excitation face of said solid-state laser medium; and
an excitation laser beam confiner extending sideward of said solid-state laser medium from said holder so as to surround said excitation face of said solid-state laser medium, said confiner having an opening for directing the excitation laser beam emitted from said laser beam output to said excitation face of said solid-state laser medium and an inner wall disposed so as to confine the excitation laser beam emitted from said laser beam output.

9. The solid-state laser apparatus of claim 8 wherein said inner wall of said excitation laser beam confiner has a tapered wall surface disposed so as to allow blocking-free radiation of said excitation laser beam emitted from said laser beam outlet in a direction perpendicular to the longitudinal direction of said solid-state laser medium with a predetermined angle of divergence.

10. The solid-state laser apparatus of claim 8 wherein said inner wall of said excitation laser beam confiner has high reflectance to said excitation laser beam.

11. The solid-state laser apparatus of claim 8 wherein an outer wall of said excitation laser beam confiner facing said laser beam generating means is of electric insulation.

12. The solid-state laser apparatus of claim 10 wherein said excitation laser beam confiner is formed from material having high reflectance to said excitation laser beam, an outer wall of said excitation laser beam confiner being covered with an electric insulation sheet.

13. The solid-state laser apparatus of claim 11 wherein said excitation laser beam confiner is formed from material having high reflectance to said excitation laser beam, said outer wall of said elicitation laser beam confiner being covered with an electric insulation sheet.

14. The solid-state laser apparatus of claim 10 wherein said excitation laser beam confiner is formed from alumina ceramic.

15. The solid-state laser apparatus of claim 11 wherein said excitation laser beam confiner is formed from alumina ceramic.

16. The solid-state laser apparatus of claim 8 wherein said holder has a passage through which coolant passes.
